# EUROPÄISCHE PATENTSCHRIFT

(11) **EP 2 973 622 B1**
(45) Veröffentlichungstag und Bekanntmachung des Hinweises auf die Patenterteilung: **09.10.2019**
(21) Anmeldenummer: 14701675.2
(22) Anmeldetag: 23.01.2014
(51) Int. Cl.: H01F 27/28, H01F 38/14, H01F 5/00, B60L 53/12

(54) **WICKLUNGSANORDNUNG, WELCHE TEILWICKLUNGEN AUFWEIST, UND ANORDNUNG, INSBESONDERE LADESTATION, ZUR BERÜHRUNGSLOSEN ENERGIEÜBERTRAGUNG AN EIN ELEKTRO-FAHRZEUG, MIT DIESER WICKLUNGSANORDNUNG**
WINDING ARRANGEMENT COMPRISING SUBWINDINGS, AND ARRANGEMENT, IN PARTICULAR CHARGING STATION, FOR INDUCTIVE ENERGY TRANSFER TO AN ELECTRIC VEHICLE WITH THIS WINDING ARRANGEMENT
AGENCEMENT D'ENROULEMENT COMPRENANT ENROULEMENTS PARTIELS, ET AGENCEMENT, EN PARTICULIER STATION DE CHARGEMENT, POUR TRANSFERT D'ÉNERGIE PAR INDUCTION À UN VÉHICULE ÉLECTRIQUE AVEC LEDIT AGENCEMENT D'ENROULEMENT

(30) Priorität: 11.02.2013 DE 102013002225; 27.06.2013 DE 102013010696
(43) Veröffentlichungstag der Anmeldung: 20.01.2016
(73) Patentinhaber: SEW-EURODRIVE GmbH & Co. KG, 76646 Bruchsal (DE)
(72) Erfinder: WOLF, Harald, 76698 Ubstadt-Weiher (DE); KREMPEL, Thomas, 76707 Hambrücken (DE); BÖSER, Andreas, 76698 Ubstadt-Weiher (DE); SCHMIDT, Josef, 76676 Graben-Neudorf (DE)
(86) Internationale Anmeldenummer: PCT/EP2014/000168
(87) Internationale Veröffentlichungsnummer: WO 2014/121895

(56) Entgegenhaltungen:
- WO-A1-2011/004803
- DE-A1-102009 049 432
- DE-A1-102011 107 620
- JP-A- S5 753 916
- US-A- 4 816 784
- US-A1- 2008 197 963
- US-A1- 2010 052 817

## Beschreibung

Die Erfindung betrifft eine Wicklungsanordnung, welche Teilwicklungen aufweist, und eine Anordnung, insbesondere Ladestation, zur berührungslosen Energieübertragung an ein Elektro-Fahrzeug, mit dieser Wicklungsanordnung.

Es ist allgemein bekannt, dass bei einer Flachwicklung Windungen eine flächige Anordnung bilden, also in einer Wicklungsfläche angeordnet sind.

Aus der US 4 816 784 A ist eine Wicklungsanordnung bekannt, die aus Teilwicklungen zusammengesetzt ist, die sich überkreuzen. Allerdings ist der Abstand zwischen den entsprechenden Windungen der Teilwicklungen in radialer Richtung zur Wicklungsachse, also von außen nach innen, konstant.

Aus der WO 2011/004803 A1 ist eine Wicklung bekannt, aus zwei parallelen Leitern in Spiralform mit Überkreuzungen.

Aus der US 2010 / 052817 A1 ist einen integrierte Induktuorstruktur mit einer hierzu ähnlichen Wicklung bekannt.

Aus der US 4 816 784 A ist ein ausbalancierter Planartransformator bekannt.

Aus der DE 10 2009 049 432 A1 ist eine Ladestation zur berührungslosen Beladung eines Elektrofahrzeugs mit einer Wicklungsanordnung bekannt.

Aus der US 2008/197963 A1 ist ein Balun Transformator bekannt.

Aus der JP S57 53916 A ist ein Mikrotransformator bekannt.

Aus der DE 10 2011 107620 A1 ist eine Flachspule für kontaktlose induktive Energieübertragung bekannt.

Der Erfindung liegt daher die Aufgabe zugrunde, eine Wicklungsanordnung mit möglichst homogenem Magnetfeld herstellbar zu machen.

Erfindungsgemäß wird die Aufgabe bei der Wicklungsanordnung nach den in Anspruch 1 und bei der Anordnung nach den in Anspruch 11 angegebenen Merkmalen gelöst.

Von Vorteil ist dabei, dass die von den jeweils zueinander zugeordneten Windungen umschlossenen Flächen gleich sind. Dies gilt auch für die direkt nachfolgende, also in der Wicklung jeweils nächste, Windung jeder Teilwicklung. Aber auch die Flächendifferenz zwischen der Windung und der ihr nachfolgenden Windung ist bei den beiden Teilwicklungen gleich.

Bei einer vorteilhaften Ausgestaltung weist diese Flächendifferenz zwei Anteile auf, wobei der erste Anteil an den Längsseiten und der andere Anteil an den Querseiten angeordnet ist. Bei einer im Wesentlichen rechteckförmigen Ausführung jeder Windung teilt sich somit diese Flächendifferenz gleichmäßig in Querrichtung und gleichmäßig in Längsrichtung auf, was zu einem besonders homogenen Magnetfeldverlauf führt. Das Verhältnis der Anteile entspricht dabei dem Verhältnis von Länge zu Breite des Rechtecks.

Erfindungsgemäß weist die Wicklungsanordnung Teilwicklungen auf,
wobei jeder Windung einer ersten Teilwicklung eine Windung einer zweiten Teilwicklung zugeordnet ist,
wobei jede Windung der ersten Teilwicklung eine Anzahl von Überkreuzungen mit der zugeordneten Windung der zweiten Teilwicklung aufweist,
wobei jeweils die von der Windung der ersten Teilwicklung umwickelte Fläche der von der jeweils zugeordneten Windung der zweiten Teilwicklung umwickelte Fläche gleicht.

Von Vorteil ist dabei, dass trotz der Ausführung als Flachwicklung mittels der Überkreuzungen die von den Teilwicklungen jeweils umwickelte Fläche gleichgroß ausführbar ist. Somit sind die Induktivitäten der parallel schaltbaren Teilwicklungen gleich groß und die Ströme gleich und somit das Magnetfeld homogen.

Ein metallischer Fremdkörper, welcher sich im von der Wicklung erzeugten Magnetfeld befindet, wird infolge von Wirbelströmen und deren Ohmschen Verlusten sowie Hysterese-Verlusten beziehungsweise Ummagnetisierungsverlusten erhitzt. Die Homogenität des Magnetfeldes bewirkt, dass die Temperatur dabei unabhängig von der Wicklungsflächenposition ist. Somit ist zur Energieübertragung an eine über der Flachwicklung herangefahrene Sekundärwicklung ein maximaler Strom in die Wicklungsanordnung einprägbar, so dass zwar eine vorgegebene Spitzentemperatur des Fremdkörpers nicht überschritten wird, aber eine maximale Leistung übertragbar ist.

Weiterer Vorteil ist bei der erfindungsgemäßen Spule, dass infolge des symmetrischen Aufbaus der beiden Teilwicklungen eine Positionsdifferenz zur mittigen Position eines Elektrofahrzeugs mit Sekundärwicklung über der Wicklungsanordnung, also eine Abweichung aus der Position stärkster Kopplung zwischen Wicklungsanordnung und Sekundärwicklung, einfach erkennbar ist, indem der jeweilige Strom in den beiden Teilwicklungen detektiert wird. Wenn also das Fahrzeug zu weit nach vorne eingeparkt wurde, ist der Strom in der ersten Teilwicklung größer als der Strom in der zweiten Teilwicklung. Wenn das Fahrzeug zu weit nach hinten eingeparkt wurde, ist der Strom in der ersten Teilwicklung kleiner als der Strom in der zweiten Teilwicklung.

Bei einer vorteilhaften Ausgestaltung ist die Anzahl gerade. Von Vorteil ist dabei, dass eine symmetrische Anordnung in einfacher Weise herstellbar ist.

Bei einer vorteilhaften Ausgestaltung verläuft der Wicklungsdraht der jeweiligen Windung der ersten Teilwicklung vor einer Überkreuzung innerhalb und nach der Überkreuzung außerhalb der jeweils zugeordnete Windung der zweiten Teilwicklung
oder
der Wicklungsdraht der jeweiligen Windung der ersten Teilwicklung verläuft vor einer Überkreuzung außerhalb und nach der Überkreuzung innerhalb der jeweils zugeordnete Windung der zweiten Teilwicklung verläuft. Von Vorteil ist dabei, dass mittels der Überkreuzung eine symmetrische Wicklungsanordnung in einfacher Weise herstellbar ist.

Bei einer vorteilhaften Ausgestaltung sind die Überkreuzungen in Windungsrichtung einer jeweiligen Windung der ersten und/oder zweiten Teilwicklung regelmäßig voneinander beabstandet. Von Vorteil ist dabei, dass wiederum eine symmetrische Wicklungsanordnung in einfacher Weise herstellbar ist.

Bei einer vorteilhaften Ausgestaltung ist der Abstand zwischen einer jeweiligen Windung der ersten Teilwicklung und der jeweils zugeordneten Windung der zweiten Teilwicklung konstant. Von Vorteil ist dabei, dass eine möglichst große Fläche für die Wicklungsanordnung vorsehbar ist und außerdem ein möglichst homogenes Magnetfeld bewirkbar ist.

Erfindungsgemäss sind die Teilwicklungen miteinander elektrisch parallelgeschaltet. Von Vorteil ist dabei, dass eine gleichmäßige Bestromung erreichbar ist und somit ein möglichst homogenes Magnetfeld.

Erfindungsgemäss sind die Teilwicklungen jeweils in einer Ebene verlaufende Flachwicklungen, insbesondere wobei die Flachwicklung jeweils innerhalb einer Wicklungsfläche angeordnet ist.

Erfindungsgemäss sind die Teilwicklungen mit Ausnahme der Bereiche der Überkreuzung und/oder der Bereiche der Herausführung der Wicklungsdrahtendbereiche ebene Wicklungen. Von Vorteil ist dabei, dass eine einfache Herstellung ermöglicht ist.

Bei einer vorteilhaften Ausgestaltung ist als Wicklungsdraht Litze verwendet, insbesondere wobei die Litze als Bündel von gegeneinander elektrisch isolierten Einzeldrähten ausgeführt ist,
insbesondere wobei die Litze Rundlitze ist, insbesondere also das Bündel im Wesentlichen einen runden Querschnitt aufweist. Von Vorteil ist dabei, dass ein einfacher und kostengünstiger Wicklungsdraht verwendbar ist.

Wichtige Merkmale bei der Anordnung, insbesondere Ladestation, zur berührungslosen Energieübertragung an ein Elektro-Fahrzeug, mit einer vorgenannten Wicklungsanordnung sind, dass von einer Wechselstromquelle ein Wechselstrom in die parallel geschalteten Teilwicklungen eingeprägt wird,
wobei das Fahrzeug an seiner Unterseite eine Sekundärwicklung aufweist, welche induktiv koppelbar ist an die Wicklungsanordnung. Von Vorteil ist dabei, dass Energie berührungslos übertragbar ist und wegen des homogenen Magnetfeldverlaufs die induktive Kopplungsstärke von Verschiebungen des Fahrzeugs nur geringfügig abhängt.

Weitere Vorteile ergeben sich aus den Unteransprüchen. Die Erfindung ist durch den Schutzumfang der vorliegenden Ansprüche begrenzt.

Die Erfindung wird nun anhand von Abbildungen näher erläutert:

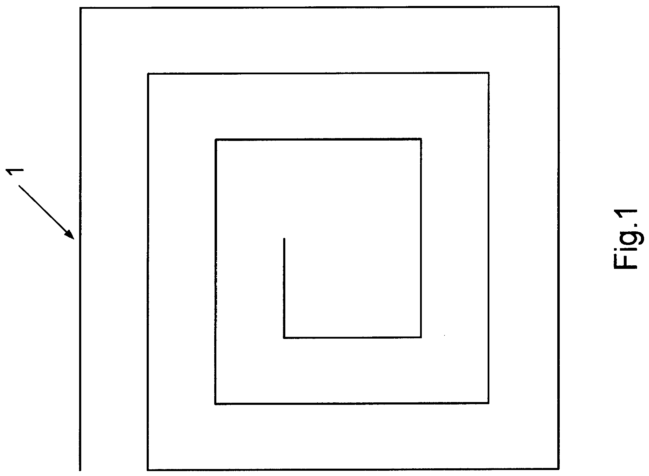

In der Figur 1 ist eine spiralförmige Flachwicklung gezeigt, insbesondere aus Rundlitze, wobei der Wicklungsdraht 1 aus einem Bündel elektrisch gegeneinander isolierter Einzeldrähte besteht, also aus HF-Litze.

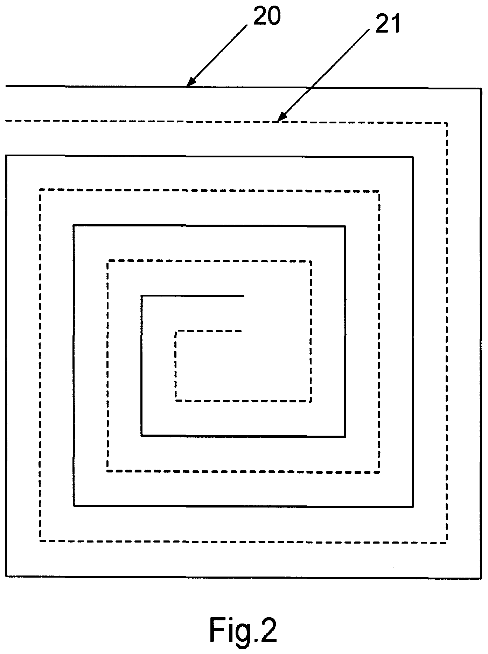

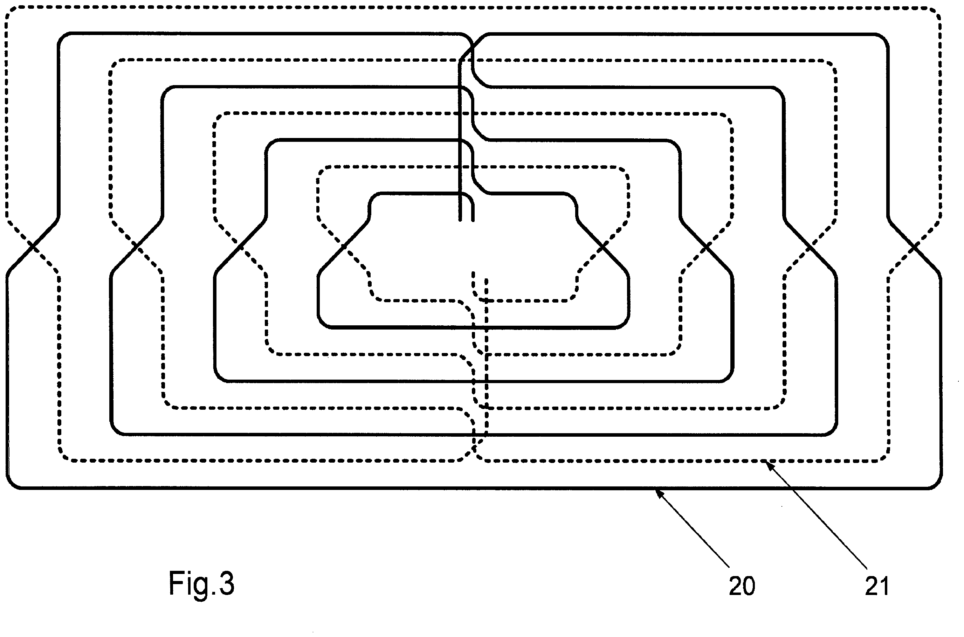

In der Figur 2 ist eine aus zwei Teilwicklungen zusammensetzbare spiralförmige Flachwicklung gezeigt, wobei die Teilwicklungen voneinander beabstandet sind. Der Wicklungsdraht 20 der ersten Teilwicklung ist mit durchgezogener Linie und der Wicklungsdraht 21 der zweiten Teilwicklung ist mit gestrichelter Linie dargestellt. In der Figur 3 ist eine erfindungsgemäße spiralförmige Flachwicklung gezeigt.

Wie in Figur 1 gezeigt, ist eine Flachwicklung, also quasi-zweidimensionale Wicklung, rechteck-spiralförmig ausführbar, wobei zwischen den jeweils benachbarten Windungen der Wicklung ein Abstand ausgeführt ist, der größer ist als der Durchmesser des Wicklungsdrahtes. Somit ist jede Windung von der vorhergehenden Windung nach außen, insbesondere also radial, beabstandet. Der Abstand beträgt ein Vielfaches des Wicklungsdrahtdurchmessers, wobei der Abstandswert vom äußeren Spulenrand zur Mitte der Spule monoton steigt, insbesondere streng monoton steigt.

Als Wicklungsdraht wird Rundlitze verwendet. Die räumliche Ausdehnung dieser Litze ist somit nicht vernachlässigbar und im Bereich des Wicklungsdrahtes jeder Windung ist das von der Wicklung erzeugte Magnetfeld weniger homogen als im Bereich zwischen den Windungen.

Wie in Figur 2 gezeigt, ist durch Ausführen der Wicklung mittels zweier Teilwicklungen ein homogenerer Magnetfeldverlauf über die bewickelte Fläche erreichbar und ein halb so großer Abstand, wobei allerdings doppelt so viel Wicklungsdraht einzusetzen ist. Denn im Bereich des Wicklungsdrahtes der Windung einer ersten Teilwicklung erzeugt die andere Teilwicklung einen homogeneren Magnetfeldverlauf als die erste Teilwicklung. Allerdings verläuft die andere Teilwicklung stets innerhalb der ersten Teilwicklung, wodurch die Induktivität der Teilwicklungen verschieden ist.

Wie in Figur 3 gezeigt, werden bei den entsprechend der Figur 2 vorgesehenen Teilwicklungen zusätzlich Überkreuzungen der Wicklungsdrähte der beiden Teilwicklungen vorgesehen. Dabei sind die Wicklungsdrähte gegeneinander elektrisch isoliert und es entsteht ein sehr homogenes Magnetfeld über der Wicklungsfläche. Außerdem haben die beiden Teilwicklungen dieselbe Induktivität.

Jeder vollständigen Windung sind zwei Überkreuzungen zugeordnet. Somit verläuft der Wicklungsdraht einer Windung einer Teilwicklung für eine halbe Windung innerhalb und für die andere halbe Windung außerhalb der entsprechenden Windung der anderen Teilwicklung.

Mit Ausnahme der Überkreuzungsbereiche und der Bereiche der Herausführung ist ein konstanter Abstand vorhanden. Die Windungsform, also der Verlauf der Windung, der einander entsprechenden Windungen der Teilwicklungen sind symmetrisch zueinander, insbesondere symmetrisch zu einer Ebene, die senkrecht auf der Wicklungsebene steht und die Überkreuzungsbereiche schneidet.

Im Bereich der insbesondere radialen Herausführung des Wicklungsdrahtes jeder Teilwicklung wird der Wicklungsdraht einer jeden Windung der zugehörigen ersten Teilwicklung stufig auf einen jeweils größeren Radialabstand geführt.

Zwar sind die Teilwicklungen in derselben Ebene anordenbar, jedoch ist im Überkreuzungsbereich eine Ausdehnung des Wickelraums senkrecht zu dieser Ebene notwendig. Alternativ sind die beiden Teilwicklungen in zwei zueinander parallelen, aber voneinander beabstandeten Ebenen angeordnet bei nur geringfügigen Einbußen der Homogenität des Magnetfeldes.

Die beiden Teilwicklungen werden elektrisch parallelgeschaltet, so dass der eingeprägte Wechselstrom sich gleichmäßig aufteilt in beide Teilwicklungen. Auch bei Einspeisung eines mittelfrequenten Wechselstroms ist wegen der Gleichheit der Induktivitäten eine gleichmäßige Aufteilung erreichbar.

Die Frequenz des eingeprägten Wechselstroms liegt vorzugsweise zwischen 10 kHz und 1 MHz.

Die Wicklung ist am Boden anordenbar, so dass ein Fahrzeug mit einer an ihm befestigten Sekundärwicklung über die Flachwicklung verfahrbar ist und durch die induktive Kopplung der Sekundärwicklung mit der Flachwicklung als Primärwicklung Energie berührungslos, insbesondere auch galvanisch getrennt übertragbar ist.

Bei einem weiteren nicht erfindungsgemäßen Beispiel ist statt der jeweiligen Ebene für die Wicklung eine Fläche verwendet, die räumlich gekrümmt verläuft.

Bei einem weiteren erfindungsgemäßen Ausführungsbeispiel sind statt der zwei Überkreuzungen pro Windung 2*n Überkreuzungen ausgeführt, insbesondere in Windungsrichtung voneinander gleichmäßig beabstandet, und/oder statt zwei Teilwicklungen mehr parallel geschaltete Teilwicklungen verwendet. Dabei ist n eine ganze Zahl. Die umwickelten Flächen der jeweiligen Teilwicklungen sind dabei ebenfalls gleich.

### Bezugszeichenliste

- 1: Wicklungsdraht
- 20: Wicklungsdraht der ersten Teilwicklung
- 21: Wicklungsdraht der zweiten Teilwicklung

## Patentansprüche

1. Wicklungsanordnung, welche Teilwicklungen aufweist,
wobei jeder Windung einer ersten Teilwicklung (20) der Teilwicklungen eine Windung einer zweiten Teilwicklung (21) der Teilwicklungen eineindeutig zugeordnet ist,
wobei die Teilwicklungen jeweils in einer Ebene verlaufende Flachwicklungen sind,
wobei die Wicklungsdrahtendbereiche der Teilwicklungen herausgeführt sind, wobei die Teilwicklungen miteinander elektrisch parallelgeschaltet sind,
wobei zwischen jeder Windung der ersten Teilwicklung und der ihr nachfolgenden Windung der ersten Teilwicklung eine Zwischenfläche umschlossen ist, deren Flächenwert dem Flächenwert der zwischen den beiden jeweils zugeordneten Windungen der zweiten Teilwicklung umschlossenen Zwischenfläche gleicht,
wobei jeweils der Flächenwert der von einer Windung der ersten Teilwicklung umschlossenen Fläche dem Flächenwert der von der jeweils eineindeutig zugeordneten Windung der zweiten Teilwicklung umschlossenen Fläche gleicht,
wobei jede Windung der ersten Teilwicklung eine Anzahl von Überkreuzungen mit der zugeordneten Windung der zweiten Teilwicklung aufweist.

2. Wicklungsanordnung nach Anspruch 1,
**dadurch gekennzeichnet, dass**
die jeweilige Wicklung jeweils eine Längsseite und eine Querseite aufweist,
wobei diese Zwischenfläche zwei Anteile, also Teilflächen, aufweist, insbesondere wobei diese Zwischenfläche aus zwei, zueinander eine leere Schnittmenge aufweisenden Anteilen, also Teilflächen, zusammengesetzt ist,
wobei jeweils der erste Anteil an der Längsseite und der andere Anteil an der Querseite der jeweiligen Windung angeordnet ist.

3. Wicklungsanordnung nach Anspruch 1 oder 2,
**dadurch gekennzeichnet, dass**
die erste Teilwicklung spiegelsymmetrisch zur zweiten Teilwicklung angeordnet ist, wobei die gedachte Spiegelebene die Überkreuzungen enthält oder durch die Überkreuzungen hindurchgeht.

4. Wicklungsanordnung nach mindestens einem der vorangegangenen Ansprüche,
**dadurch gekennzeichnet, dass**
die erste Teilwicklung durch Drehung, insbesondere in der Wicklungsebene, um 180° in die zweite Teilwicklung überführbar ist
und/oder dass
die erste Teilwicklung durch Drehung, insbesondere in der Wicklungsebene, um 180° mit der zweiten Teilwicklung in Deckung bringbar ist.

5. Wicklungsanordnung nach mindestens einem der vorangegangenen Ansprüche,
**dadurch gekennzeichnet, dass**
die Anzahl von Überkreuzungen geradzahlig ist.

6. Wicklungsanordnung nach mindestens einem der vorangegangenen Ansprüche,
**dadurch gekennzeichnet, dass**
der Wicklungsdraht (20) der jeweiligen Windung der ersten Teilwicklung vor einer Überkreuzung innerhalb und nach der Überkreuzung außerhalb der jeweils zugeordneten Windung der zweiten Teilwicklung verläuft, insbesondere wobei die erste und zweite Teilwicklung konzentrisch angeordnet sind,
oder dass
der Wicklungsdraht (20) der jeweiligen Windung der ersten Teilwicklung vor einer Überkreuzung außerhalb und nach der Überkreuzung innerhalb der jeweils zugeordneten Windung der zweiten Teilwicklung verläuft, insbesondere wobei die erste und zweite Teilwicklung konzentrisch angeordnet sind.

7. Wicklungsanordnung nach mindestens einem der vorangegangenen Ansprüche,
**dadurch gekennzeichnet, dass**
die Überkreuzungen in Windungsrichtung, insbesondere also Wicklungsrichtung, einer jeweiligen Windung der ersten und/oder zweiten Teilwicklung in Umfangsrichtung, insbesondere also Drehwinkelrichtung um die Wicklungsachse der Wicklungsanordnung, regelmäßig voneinander beabstandet sind.

8. Wicklungsanordnung nach mindestens einem der vorangegangenen Ansprüche,
**dadurch gekennzeichnet, dass**
der Abstand, insbesondere in Längsrichtung und/oder Querrichtung der Wicklungsanordnung, zwischen einer jeweiligen Windung der ersten Teilwicklung und der jeweils zugeordneten Windung der zweiten Teilwicklung konstant ist oder in radialer Richtung, also von der äußersten Windung zur innersten Windung, monoton zunimmt, insbesondere an einer vorgegebenen oder an jeder Umfangswinkelposition außerhalb des von einer Überkreuzung überdeckten Umfangswinkelbereichs.

9. Wicklungsanordnung nach mindestens einem der vorangegangenen Ansprüche,
**dadurch gekennzeichnet, dass**
als Wicklungsdraht (20) Litze verwendet ist, insbesondere wobei die Litze als Bündel von gegeneinander elektrisch isolierten Einzeldrähten ausgeführt ist,
insbesondere wobei die Litze Rundlitze ist, insbesondere also das Litzenbündel im Wesentlichen einen runden Querschnitt aufweist.

10. Wicklungsanordnung nach mindestens einem der vorangegangenen Ansprüche,
**dadurch gekennzeichnet, dass**
die Teilwicklungen der Wicklungsanordnung bezüglich eines Punktes zueinander punktsymmetrisch angeordnet sind.

11. Anordnung, insbesondere Ladestation, zur berührungslosen Energieübertragung an ein Elektro-Fahrzeug, mit einer Wicklungsanordnung nach mindestens einem der vorangegangenen Ansprüche,
wobei die Anordnung
- das Fahrzeug,
- eine Wechselstromquelle,
- die Wicklungsanordnung mit den Teilwicklungen, welche zueinander elektrisch parallelgeschaltet sind,
aufweist,
**dadurch gekennzeichnet, dass**
von der Wechselstromquelle ein Wechselstrom in die parallel geschalteten Teilwicklungen einprägbar ist, insbesondere eingeprägt ist, wobei das Fahrzeug an seiner Unterseite eine Sekundärwicklung aufweist, welche induktiv koppelbar ist an die Wicklungsanordnung.

## Claims

1. Winding arrangement having partial windings,
wherein each turn of a first partial winding (20) of the partial windings is uniquely associated with a turn of a second partial winding (21) of the partial windings,
wherein the partial windings are in each case flat windings extending in one plane,
wherein the winding wire end regions of the partial windings are led out,
wherein the partial windings are electrically connected in parallel with one another,
wherein enclosed between each turn of the first partial winding and the following turn of the first partial winding is an intermediate area, the area value of which is equal to the area value of the intermediate area enclosed between the two respectively associated turns of the second partial winding,
wherein in each case the area value of the area enclosed by a turn of the first partial winding is equal to the area value of the area enclosed by the respective uniquely associated turn of the second partial winding,
wherein each turn of the first partial winding has a number of crossovers with the associated turn of the second partial winding.

2. Winding arrangement according to claim 1,
**characterized in that**
the respective winding has in each case a longitudinal side and a transverse side,
wherein said intermediate area has two parts, that is to say subareas, in particular wherein said intermediate area is composed of two parts, that is to say subareas, which have an empty overlap with one another,
wherein in each case the first part is arranged on the longitudinal side and the other part is arranged on the transverse side of the respective turn.

3. Winding arrangement according to claim 1 or 2,
**characterized in that**
the first partial winding is arranged mirror-symmetrically in relation to the second partial winding, wherein the imaginary mirror plane contains the crossovers or passes through the crossovers.

4. Winding arrangement according to at least one of the preceding claims,
**characterized in that**
the first partial winding can be moved into the second partial winding by being rotated through 180°, in particular in the winding plane,
and/or **in that**
the first partial winding can be brought into coincidence with the second partial winding by being rotated through 180°, in particular in the winding plane.

5. Winding arrangement according to at least one of the preceding claims,
**characterized in that**
the number of crossovers is an even number.

6. Winding arrangement according to at least one of the preceding claims,
**characterized in that**
the winding wire (20) of the respective turn of the first partial winding runs inside the respectively associated turn of the second partial winding before a crossover and runs outside of said turn after the crossover, in particular wherein the first and second partial winding are arranged concentrically,
or **in that**
the winding wire (20) of the respective turn of the first partial winding runs outside of the respectively associated turn of the second partial winding before a crossover and runs inside said turn after the crossover, in particular wherein the first and second partial winding are arranged concentrically.

7. Winding arrangement according to at least one of the preceding claims,
**characterized in that**
the crossovers are regularly spaced apart from one another in the turn direction, that is to say in particular the winding direction, of a respective turn of the first and/or second partial winding in the circumferential direction, that is to say in particular the rotation angle direction around the winding axis of the winding arrangement.

8. Winding arrangement according to at least one of the preceding claims,
**characterized in that**
the spacing, in particular in the longitudinal direction and/or transverse direction of the winding arrangement, between a respective turn of the first partial winding and the respectively associated turn of the second partial winding is constant or increases monotonically in the radial direction, that is to say from the outermost turn to the innermost turn, in particular at a predefined circumferential angle position or at any circumferential angle position outside of the circumferential angle range covered by a crossover.

9. Winding arrangement according to at least one of the preceding claims,
**characterized in that**
braid is used as the winding wire (20), in particular wherein the braid is configured as a bundle of individual wires which are electrically insulated from one another,
in particular wherein the braid is round braid, that is to say in particular the braid bundle has a substantially round cross-section.

10. Winding arrangement according to at least one of the preceding claims,
**characterized in that**
the partial windings of the winding arrangement are arranged point-symmetrically to one another in relation to a point.

11. Assembly, in particular a charging station, for contactlessly transmitting energy to an electric vehicle, having a winding arrangement according to at least one of the preceding claims,
wherein the assembly comprises
- the vehicle,
- an AC power source,
- the winding arrangement having the partial windings which are electrically connected in parallel with one another,
**characterized in that**
an alternating current can be impressed, in particular is impressed, in the parallel-connected partial windings by the AC power source,
wherein the vehicle has, on the underside thereof, a secondary winding which can be inductively coupled to the winding arrangement.

## Revendications

1. Agencement d'enroulements comportant des enroulements partiels,
un tour d'un second enroulement partiel (21), au sein des enroulements partiels, étant associé de manière biunivoque à chaque tour d'un premier enroulement partiel (20), au sein desdits enroulements partiels,
lesquels enroulements partiels sont des enroulements aplatis s'étendant respectivement dans un plan,
les régions extrêmes des fils desdits enroulements partiels étant orientées vers l'extérieur, lesdits enroulements partiels étant raccordés électriquement avec branchement mutuel en parallèle,
une surface intermédiaire étant circonscrite entre chaque tour du premier enroulement partiel et le tour du premier enroulement partiel qui lui succède, la valeur de ladite surface étant égale à la valeur de la surface intermédiaire circonscrite entre les deux tours du second enroulement partiel, respectivement associés,
sachant que la valeur de la surface circonscrite par un tour du premier enroulement partiel est égale, à chaque fois, à la valeur de la surface circonscrite par le tour du second enroulement partiel, qui est respectivement associé de manière biunivoque,
chaque tour du premier enroulement partiel décrivant un certain nombre d'entrecroisements avec le tour associé du second enroulement partiel.

2. Agencement d'enroulements selon la revendication 1,
**caractérisé par le fait que**
l'enroulement considéré est pourvu, à chaque fois, d'un côté longitudinal et d'un côté transversal,
cette surface intermédiaire comprenant deux parties constitutives, c'est-à-dire des surfaces partielles, sachant notamment que cette surface intermédiaire est composée de deux parties constitutives, c'est-à-dire de surfaces partielles présentant réciproquement une intersection vide,
sachant que la première partie constitutive se trouve, à chaque fois, sur le côté longitudinal et que l'autre partie constitutive se trouve sur le côté transversal du tour respectif.

3. Agencement d'enroulements selon la revendication 1 ou 2,
**caractérisé par le fait que**
le premier enroulement partiel est disposé avec symétrie spéculaire par rapport au second enroulement partiel, sachant que le plan spéculaire virtuel contient les entrecroisements, ou passe par lesdits entrecroisements.

4. Agencement d'enroulements selon au moins l'une des revendications précédentes,
**caractérisé par le fait que**
le premier enroulement partiel peut être transposé dans le second enroulement partiel par rotation de 180°, notamment dans le plan d'enroulement ;
et/ou **par le fait que**
ledit premier enroulement partiel peut être amené à coïncider avec ledit second enroulement partiel par rotation de 180°, notamment dans ledit plan d'enroulement.

5. Agencement d'enroulements selon au moins l'une des revendications précédentes,
**caractérisé par le fait que**
le nombre d'entrecroisements est un nombre pair.

6. Agencement d'enroulements selon au moins l'une des revendications précédentes,
**caractérisé par le fait que**
le fil (20) du tour considéré du premier enroulement partiel s'étend à l'intérieur du tour respectivement associé du second enroulement partiel, avant un entrecroisement, et à l'extérieur dudit tour après ledit entrecroisement, sachant notamment que lesdits premier et second enroulements partiels sont disposés de manière concentrique ;
ou **par le fait que**
le fil (20) du tour considéré du premier enroulement partiel s'étend à l'extérieur du tour respectivement associé du second enroulement partiel, avant un entrecroisement, et à l'intérieur dudit tour après ledit entrecroisement, sachant notamment que lesdits premier et second enroulements partiels sont disposés de manière concentrique.

7. Agencement d'enroulements selon au moins l'une des revendications précédentes,
**caractérisé par le fait que**
les entrecroisements sont régulièrement espacés les uns des autres dans le sens de circonvolution, c'est-à-dire dans le sens d'enroulement d'un tour considéré du (des) premier et/ou second enroulement(s) partiel(s) dans la direction périphérique, donc en particulier dans la direction de l'angle de rotation, autour de l'axe d'enroulement dudit agencement d'enroulements.

8. Agencement d'enroulements selon au moins l'une des revendications précédentes,
**caractérisé par le fait que**
la distance comprise, notamment dans la direction longitudinale et/ou dans la direction transversale dudit agencement d'enroulements, entre un tour considéré du premier enroulement partiel et le tour du second enroulement partiel, respectivement associé, est constante ou croît de façon monotone dans le sens radial, c'est-à-dire depuis le tour le plus à l'extérieur jusqu'au tour le plus à l'intérieur, en particulier au niveau d'un emplacement angulaire périphérique préétabli, ou de chaque emplacement angulaire périphérique en dehors de la plage d'angles périphériques couverte par un entrecroisement.

9. Agencement d'enroulements selon au moins l'une des revendications précédentes,
**caractérisé par le fait**
**qu'**un toron est utilisé en tant que fil d'enroulement (20), sachant notamment que ledit toron est réalisé sous la forme d'un faisceau de fils individuels isolés électriquement les uns des autres,
ledit toron se présentant notamment comme un toron rond, c'est-à-dire, par conséquent, que le faisceau dudit toron est muni, pour l'essentiel, d'une section transversale circulaire.

10. Agencement d'enroulements selon au moins l'une des revendications précédentes,
**caractérisé par le fait que**
les enroulements partiels dudit agencement d'enroulements sont mutuellement disposés avec symétrie ponctuelle par rapport à un point.

11. Dispositif, en particulier poste de chargement dévolu à la transmission d'énergie à un véhicule électrique, avec absence de contact, doté d'un agencement d'enroulements conforme à au moins l'une des revendications précédentes,
lequel dispositif comprend
- ledit véhicule,
- une source de courant alternatif,
- ledit agencement d'enroulements, muni des enroulements partiels qui sont raccordés électriquement avec branchement mutuel en parallèle,
**caractérisé par le fait**
**qu'**un courant alternatif est injectable et est notamment injecté, par la source de courant alternatif, dans les enroulements partiels branchés en parallèle,
le véhicule étant pourvu, à sa face inférieure, d'un enroulement secondaire pouvant être couplé de manière inductive audit agencement d'enroulements.
